# EUROPEAN PATENT APPLICATION

(11) **EP 4 332 360 A2**
(43) Date of publication of application: **06.03.2024**
(21) Application number: 23195240.9
(22) Date of filing: 04.09.2023
(51) Int. Cl.: F02C 7/20, F02C 7/24, F02K 1/04

(54) **EXHAUST CENTERBODY ASSEMBLY**

(30) Priority: 02.09.2022 US 202217902545
(71) Applicant: Rohr, Inc., Chula Vista, CA 91910-2098 (US)
(72) Inventor: GAUL, David, San Diego, 92111 (US); RATAJAC, Aleksandar, San Diego, 92117 (US); CHURCH, Victor A., San Diego, 92120 (US); ANDERSON, Charles L., Purvis, 39475 (US); ERICKSON, Stephen, Bonita, 91902 (US); LOPEZ, Carlos A., San Marcos, 92078 (US); ALONSO-MIRALLES, Jose S., Chula Vista, 91915 (US); SHERMAN, Brian A., Chula Vista, 91910 (US); KOROLY, Christopher C., Spring Valley, 91977 (US)
(74) Representative: Dehns

(57) **Abstract**

A centerbody assembly (48) includes a center tube (56), a forward bulkhead (58), an aft bulkhead (60), at least one baffle (64), and an outer skin (52). The center tube (56) extends circumferentially about an axial centerline (34). The center tube (56) extends between and to a first axial tube end (88) and a second axial tube end (90). The forward bulkhead (58) is mounted to the center tube (56) at the first axial tube end (88). The aft bulkhead (60) is mounted to the center tube (56) at the second axial tube end (90). The at least one baffle (64) extends axially from the forward bulkhead (58) to the aft bulkhead (60). At least the forward bulkhead (58), the aft bulkhead (60), or the at least one baffle (64) include one or more thermal beads (112, 142). The outer skin (52) circumscribes the center tube (56), the forward bulkhead (58), the aft bulkhead (60), and the at least one baffle (64) to form an acoustic cavity (66) radially inside the outer skin (52).

## Description

### BACKGROUND

### Technical Field

This disclosure relates generally to exhaust sections for aircraft propulsion systems, and more particularly to exhaust centerbody assemblies.

### Background Information

Exhaust assemblies for aircraft propulsion systems may include exhaust centerbody structures which form a portion of an exhaust flow path for exiting combustion exhaust gas. Various configurations for exhaust centerbody structures are known in the art. While these known configurations have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a centerbody assembly includes a center tube, a forward bulkhead, an aft bulkhead, at least one baffle, and an outer skin. The center tube extends circumferentially about an axial centerline. The center tube extends between and to a first axial tube end and a second axial tube end. The forward bulkhead is mounted to the center tube at the first axial tube end. The aft bulkhead is mounted to the center tube at the second axial tube end. The at least one baffle extends axially from the forward bulkhead to the aft bulkhead. At least the forward bulkhead, the aft bulkhead, or the at least one baffle include one or more thermal beads. The outer skin circumscribes the center tube, the forward bulkhead, the aft bulkhead, and the at least one baffle to form an acoustic cavity radially inside the outer skin.

In any of the aspects or embodiments described above and herein, the outer skin may include a perforated skin portion and an imperforate skin portion. The perforated skin portion may be disposed axially forward of the imperforate skin portion.

In any of the aspects or embodiments described above and herein, the perforated skin portion may have a perforation open area of between 15 and 35 percent.

In any of the aspects or embodiments described above and herein, the perforated skin portion may be configured with a concave shape facing an exterior of the centerbody assembly and the imperforate skin portion may be configured with a convex shape facing the exterior of the centerbody assembly.

In any of the aspects or embodiments described above and herein, each of the forward bulkhead and the aft bulkhead may be forwardly canted such that the forward bulkhead and the aft bulkhead extend in an axially forward direction from an inner radial position to an outer radial position.

In any of the aspects or embodiments described above and herein, the forward bulkhead and the aft bulkhead may be substantially parallel.

In any of the aspects or embodiments described above and herein, the aft bulkhead may be configured to be detached from the centerbody assembly by an operator at a position aft of the aft bulkhead.

In any of the aspects or embodiments described above and herein, each of the forward bulkhead and the aft bulkhead may include the one or more thermal beads.

In any of the aspects or embodiments described above and herein, each of the one or more thermal beads of the forward bulkhead and the aft bulkhead may extend circumferentially about the axial centerline.

In any of the aspects or embodiments described above and herein, the at least one baffle may include the one or more thermal beads.

In any of the aspects or embodiments described above and herein, the at least one baffle may extend axially between and to a first axial baffle end and a second axial baffle end. The one or more thermal beads of the at least one baffle may extend axially from the first axial baffle end to the second axial baffle end.

In any of the aspects or embodiments described above and herein, each of the one or more thermal beads may form a corrugation of the at least the forward bulkhead, the aft bulkhead, or the at least one baffle.

In any of the aspects or embodiments described above and herein, the center tube may include an internal passage and the forward bulkhead may include a first center aperture. The forward bulkhead may be mounted to the center tube with the first center aperture positioned coincident with the internal passage. The aft bulkhead may include a second center aperture. The aft bulkhead may be mounted to the center tube with the second center aperture positioned coincident with the internal passage.

According to another aspect of the present disclosure, a centerbody assembly includes a center tube, a forward bulkhead, an aft bulkhead, an outer skin, and at least one baffle. The center tube extends circumferentially about an axial centerline. The center tube extends between and to a first axial tube end and a second axial tube end. The forward bulkhead is at the first axial tube end. The aft bulkhead is at the second axial tube end. Each of the forward bulkhead and the aft bulkhead are forwardly canted such that the forward bulkhead and the aft bulkhead extend in an axially forward direction from an inner radial position to an outer radial position. Each of the forward bulkhead and the aft bulkhead include one or more thermal beads. The outer skin circumscribes the center tube, the forward bulkhead, and the aft bulkhead to form an acoustic cavity radially inside the outer skin. The at least one baffle extends radially from the center tube to the outer skin.

In any of the aspects or embodiments described above and herein, the forward bulkhead and the aft bulkhead may be substantially parallel.

In any of the aspects or embodiments described above and herein, each of the one or more thermal beads may form a corrugation of the forward bulkhead or the aft bulkhead.

According to another aspect of the present disclosure, a centerbody assembly includes a center tube, a forward bulkhead, an aft bulkhead, and at least one baffle. The center tube extends circumferentially about an axial centerline. The center tube extends between and to a first axial tube end and a second axial tube end. The forward bulkhead is mounted to the center tube at the first axial tube end. The aft bulkhead is mounted to the center tube at the second axial tube end. The at least one baffle extends axially from the forward bulkhead to the aft bulkhead. Each of the forward bulkhead, the aft bulkhead, and the at least one baffle include one or more thermal beads.

In any of the aspects or embodiments described above and herein, the at least one baffle may extend axially between and to a first axial baffle end and a second axial baffle end. The one or more thermal beads of the at least one baffle extend axially from the first axial baffle end to the second axial baffle end.

In any of the aspects or embodiments described above and herein, the one or more thermal beads of the at least one baffle may be radially coincident with the one or more thermal beads of each of the forward bulkhead and the aft bulkhead.

In any of the aspects or embodiments described above and herein, each thermal bead of the one or more thermal beads may include a concavity and a convexity.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a cutaway, schematic view of an aircraft propulsion assembly, in accordance with one or more embodiments of the present disclosure.
FIG. 2 illustrates a perspective view of a portion of a propulsion system exhaust section, in accordance with one or more embodiments of the present disclosure.
FIG. 3 illustrates an exploded, perspective view of a forward centerbody assembly for the exhaust centerbody of FIG. 2, in accordance with one or more embodiments of the present disclosure.
FIG. 4 illustrates a side view of a portion of the forward centerbody assembly of FIG. 3, in accordance with one or more embodiments of the present disclosure.
FIG. 5 illustrates a perspective view of a portion of the forward centerbody assembly of FIG. 3, in accordance with one or more embodiments of the present disclosure.
FIG. 6 illustrates a side, sectional view of a portion of the forward centerbody assembly of FIG. 3, in accordance with one or more embodiments of the present disclosure.
FIGS. 7A-B illustrate front views of exemplary bulkhead configurations for a forward centerbody assembly, in accordance with one or more embodiments of the present disclosure.
FIG. 8 illustrates a cutaway, perspective view of a portion of the forward centerbody assembly of FIG. 3, in accordance with one or more embodiments of the present disclosure.
FIG. 9 illustrates a cutaway side view of a portion of the forward centerbody assembly of FIG. 3, in accordance with one or more embodiments of the present disclosure.

### DETAILED DESCRIPTION

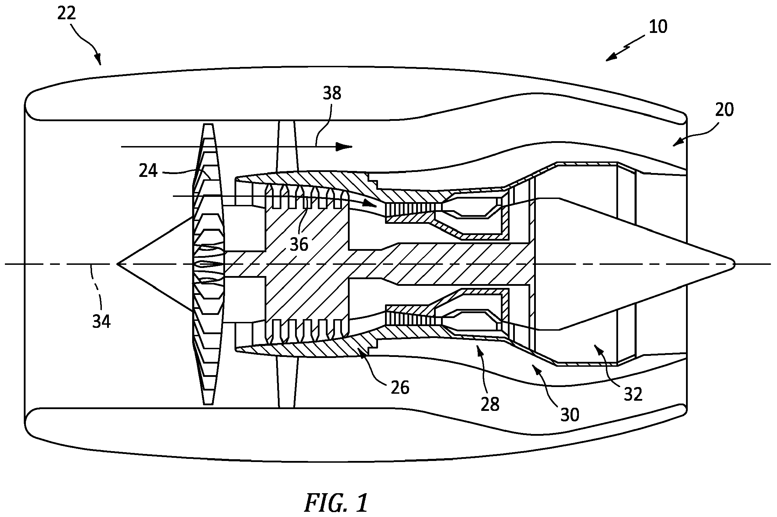

FIG. 1 illustrates a propulsion assembly 10 for an aircraft. The propulsion assembly 10 of FIG. 1 includes a propulsion system 20 and a nacelle 22. The propulsion system 20 of FIG. 1 is configured as a multi-spool turbofan gas turbine engine for the aircraft propulsion assembly 10. However, while the following description and accompanying drawings may refer to the turbofan gas turbine engine propulsion assembly 10 of FIG. 1 as an example, it should be understood that aspects of the present disclosure may be equally applicable to other configurations of gas turbine engines (e.g., a turboshaft gas turbine engine, a turboprop gas turbine engine, a turbojet gas turbine engine, a propfan gas turbine engine, an open rotor gas turbine engine, etc.).

The propulsion system 20 of FIG. 1 includes a fan 24, a compressor section 26, a combustor section 28, a turbine section 30, and an exhaust section 32 disposed along an axial centerline 34 of the propulsion assembly 10. In operation, the fan 24 draws and directions ambient air into the propulsion system 10. The air may be divided into a core flow path 36 and a bypass flow path 38. Each of the core flow path 36 and the bypass flow path 38 may be annular flow paths extending circumferentially about (e.g., completely around) the axial centerline 34. The core flow path 36 extends through the propulsion system 20. Air flow along the core flow path 36 is directed through the compressor section 26, the combustor section 28, the turbine section 30, and the exhaust section 32. The compressor section 26 increases the pressure of the air along the core flow path 36 and directs the air into the combustor section 28 where the air mixed with fuel and ignited. The combustion gas resulting from the combusted fuel and air mixture flows through the turbine section 30 causing one or more bladed turbine rotors to rotate and drive one or more rotors (e.g., bladed compressor rotors) and the fan 24 via one or more shafts. Exhaust gas exiting the turbine section 30 is directed out of the gas turbine engine 20 through the exhaust section 32. The bypass flow path 38 extends through the propulsion assembly 10 outside of the propulsion system 20. Air flow along the bypass flow path 38 may be directed through the propulsion assembly 10 by one or more bypass ducts.

The nacelle 22 is configured to house and provide an aerodynamic cover for the propulsion system 20. The nacelle 22 extends axially along the axial centerline 34 of the propulsion assembly 10. The nacelle 22 extends circumferentially about (e.g., completely around) the axial centerline 34.

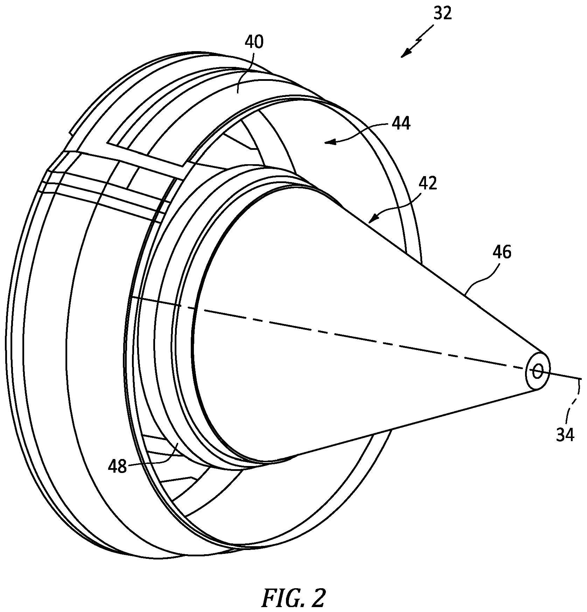

FIG. 2 illustrates a portion of the exhaust section 32. The exhaust section 32 of FIG. 2 includes an exhaust nozzle 40 and an exhaust centerbody 42 extending along the axial centerline 34. Components of the exhaust section 32 are described herein with respect to the axial centerline 34 of the propulsion assembly 10, however, it should be understood that one or more components of the exhaust section 32 may be configured with axial centerlines which are offset from or otherwise different than the axial centerline 34. The exhaust nozzle 40 extends circumferentially about (e.g., completely around) the exhaust centerbody 42. The exhaust nozzle 40 is radially spaced from the exhaust centerbody 42 to form an exhaust annulus 44 through which combustion exhaust gas from the core flow path 36 (see FIG. 1) may exit the exhaust section 32 (e.g., to generate forward thrust for the propulsion assembly 10).

The exhaust centerbody 42 of FIG. 2 includes an aft centerbody assembly 46 and a forward centerbody assembly 48. The aft centerbody assembly 46 may be configured, for example, as a cone (e.g., a hollow cone). The aft centerbody assembly 46 may extend aftward from the forward centerbody assembly 48. The present disclosure, however, is not limited to any particular configuration of the aft centerbody assembly 46. As used herein, the terms "forward" and "aft" are defined as follows: forward is defined as being upstream of aft (e.g., air enters the propulsion system 20 through the forward-located fan 24 and exits the propulsion assembly 20 through the aft-located exhaust section 32 (see FIG. 1)).

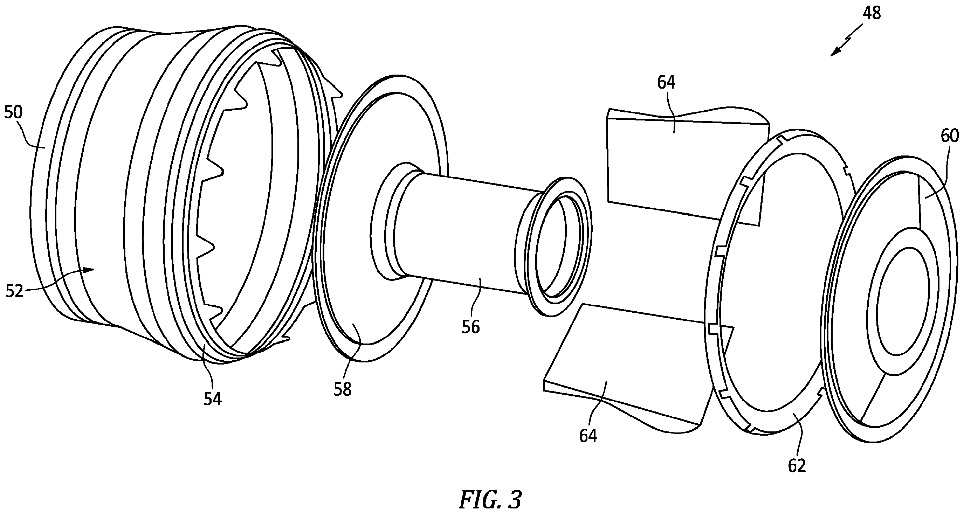

FIG. 3 illustrates an exploded view of components of the forward centerbody assembly 48. The forward centerbody assembly 48 of FIG. 3 includes a forward flange 50, an outer skin 52, an aft ring 54, a center tube 56, a forward bulkhead 58, an aft bulkhead 60, an outer attachment ring 62, and at least one baffle 64.

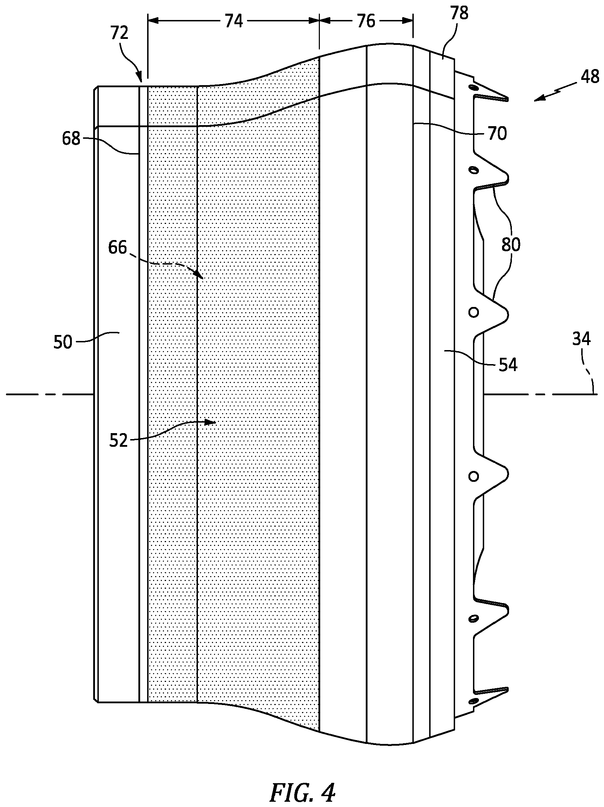

FIG. 4 includes a side view of the forward centerbody assembly 48 illustrating the forward flange 50, the outer skin 52, and the aft ring 54. The forward flange 50 extends circumferentially about (e.g., completely around) the axial centerline 34. The forward flange 50 forms a plurality of apertures (not shown) through the forward flange 50, which plurality of apertures may be circumferentially distributed (e.g., circumferentially spaced) about the axial centerline 34. The forward flange 50 may, therefore, be configured for mounting the exhaust centerbody 42 (see FIG. 2) to a static structure (e.g., a turbine exhaust case (TEC)) of the propulsion system 20 (see FIG. 1) using, for example, a plurality of fasteners.

The outer skin 52 extends circumferentially about (e.g., completely around) the axial centerline 34. The outer skin 52 circumscribes (e.g., radially circumscribes) the center tube 56, the forward bulkhead 58, the aft bulkhead 58, and the at least one baffle 64 (see FIG. 3). The outer skin 52 forms (e.g., forms an outer radial boundary of) an acoustic cavity 66 for the forward centerbody assembly 48. The outer skin 52 extends (e.g., axially extends) between and to a first axial end 68 of the outer skin 52 and a second axial end 70 of the outer skin 52. The first axial end 68 is mounted to or otherwise positioned at (e.g., on, adjacent, or proximate) the forward flange 50. The outer skin 52 of FIG. 4 includes a first axial portion 72, a second axial portion 74, and a third axial portion 76.

The first axial portion 72 is disposed at (e.g., on, adjacent, or proximate) the first axial end 68. The first axial portion 72 of FIG. 4 extends (e.g., axially extends) between and to the first axial end 68 and the second axial portion 74. The first axial portion 72 may be configured as an imperforate portion of the outer skin 52.

The second axial portion 74 of FIG. 4 extends (e.g., axially extends) between and to the first axial portion 72 and the third axial portion 76. The second axial portion 74 may be configured as a perforated portion of the outer skin 52. The second axial portion 74 may form a plurality of apertures through the second axial portion 74, which plurality of apertures may direct at least a portion of the combustion exhaust gas, flowing through the exhaust annulus 44 (see FIG. 2), through the second axial portion 74 and into the acoustic cavity 66 for attenuation of exhaust noise (e.g., low-frequency combustion noise) for the propulsion assembly 10 (see FIG. 1). The second axial portion 74 may have a perforation open area (POA) of, for example, between fifteen percent (15%) and thirty-five percent (35%), or for example, between twenty percent (20%) and thirty percent (30%), or for example, approximately twenty-five percent (25%). The POA may be understood to represent a ratio of an amount (e.g., a volume) of the second axial portion 74 occupied by the plurality of apertures compared to an amount (e.g., a volume) of the second axial portion 74 occupied by an outer skin material of the second axial portion 74. The second axial portion 74 of FIG. 4 is configured with a concave shape extending axially along the second axial portion 74, which concave shape faces an exterior of the forward centerbody assembly 48. The concave shape of the second axial portion 74 may extend circumferentially about (e.g., completely around) the axial centerline 34.

The third axial portion 76 of FIG. 4 extends (e.g., axially extends) between and to the second axial portion 74 and the second axial end 70. The third axial portion 76 may be disposed radially outward of the second axial portion 74. The third axial portion 76 may be configured as an imperforate portion of the outer skin 52. The third axial portion 76 of FIG. 4 is configured with a convex shape extending axially along the third axial portion 76, which convex shape faces an exterior of the forward centerbody assembly 48. The convex shape of the third axial portion 76 may extend circumferentially about (e.g., completely around) the axial centerline 34.

The aft ring 54 includes a ring body 78 and a plurality of mounting members 80. The ring body 78 is mounted to or otherwise positioned at (e.g., on, adjacent, or proximate) the second axial end 70. The ring body 78 extends circumferentially about (e.g., completely around) the axial centerline 34. The plurality of mounting members 80 are mounted to or otherwise formed by the ring body 78. The plurality of mounting members 80 extend outward from the aft ring 54 in a generally aftward direction. For example, the plurality of mounting members 80 of FIG. 4 extend outward from the ring body 78 in an axially aft and radially inward direction. The plurality of mounting members 80 are circumferentially distributed (e.g., circumferentially spaced) about the axial centerline 34. The plurality of mount members 80 are configured to be fixedly mounted to the aft centerbody assembly 46 (e.g., using one or more fasteners) for mounting the aft centerbody assembly 46 to the forward centerbody assembly 48.

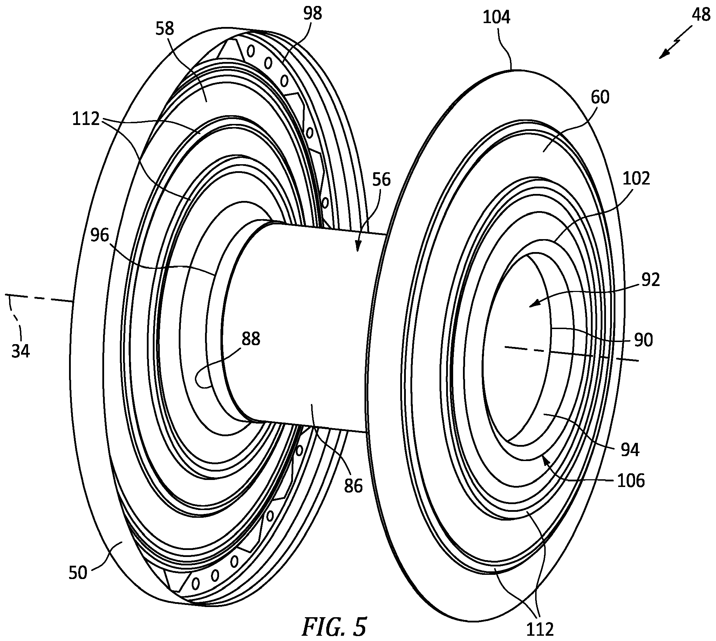

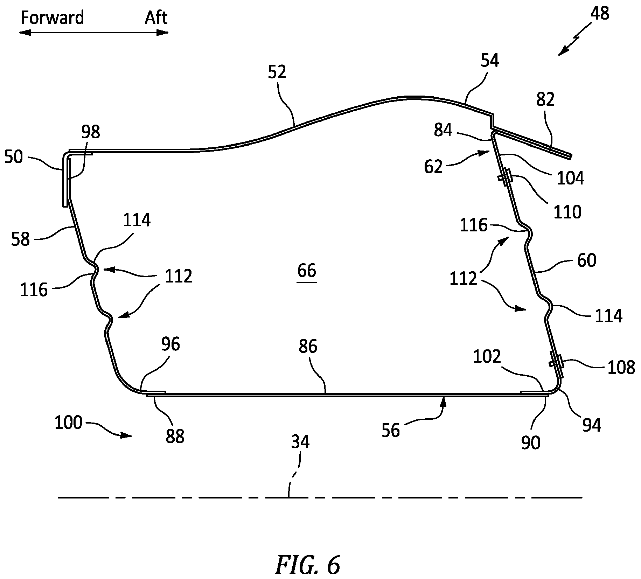

FIGS. 5 and 6 illustrate portions of the forward centerbody assembly 48 including the forward flange 50, the outer skin 52, the aft ring 54, the center tube 56, the forward bulkhead 58, the aft bulkhead 60, and the outer attachment ring 62.

The outer attachment ring 62 extends circumferentially about (e.g., completely around) the axial centerline 34. The outer attachment ring 62 includes a first flange portion 82 and a second flange portion 84. The second flange portion 84 is oriented transverse to the first flange portion 82. The first flange portion 82 is mounted to the aft ring 54 (e.g., an inner radial portion of the aft ring 54). For example, the first flange portion 82 may be mounted to the aft ring 54 using one or more fasteners (e.g., pull fasteners, not shown).

The center tube 56 includes a tubular body 86 extending (e.g., axially extends) between and to a first axial end 88 of the center tube 56 and a second axial end 90 of the center tube 56. The tubular body 86 extends circumferentially about (e.g., completely around) the axial centerline 34. The tubular body 86 forms an internal passage 92 of the center tube 56, which internal passage 92 extends through the center tube 56 along the axial centerline 34 from the first axial end 88 to the second axial end 90. The center tube 56 of FIGS. 5 and 6 includes an inner attachment ring 94 at (e.g., on, adjacent, or proximate) the second axial end 90. The inner attachment ring 94 may be mounted to the tubular body 86, for example, by one or more fasteners (e.g., pull fasteners).

The forward bulkhead 58 extends (e.g., radially extends) between and to an inner radial end 96 of the forward bulkhead 58 and an outer radial end 98 of the forward bulkhead 58. The forward bulkhead 58 extends circumferentially about (e.g., completely around) the axial centerline 34. The inner radial end 96 forms a center aperture 100 of the forward bulkhead 58, which center aperture 100 may be aligned with the internal passage 92. The inner radial end 96 of FIGS. 5 and 6 is mounted to the center tube 56 at (e.g., on, adjacent, or proximate) the first axial end 88, for example, using one or more fasteners (e.g., pull fasteners). The forward bulkhead 58 of FIGS. and 6 is mounted to the forward flange 50 at (e.g., on, adjacent, or proximate) the outer radial end 98, for example, using one or more fasteners. The forward bulkhead 58 of FIGS. 5 and 6 is forwardly canted such that the forward bulkhead 58 extends in an axially forward direction from an inner radial position (e.g., the inner radial end 96) to an outer radial position (e.g., the outer radial end 98). The forwardly-canted forward bulkhead 58 may form a conical shape in which the outer radial end 98 is axially forward of the inner radial end 96 circumferentially about (e.g., completely around) the axial centerline 34. The forward bulkhead 58 of the present disclosure, however, is not limited to any particular orientation.

The aft bulkhead 60 extends (e.g., radially extends) between and to an inner radial end 102 of the aft bulkhead 60 and an outer radial end 104 of the aft bulkhead 60. The aft bulkhead 60 extends circumferentially about (e.g., completely around) the axial centerline 34. The inner radial end 102 forms a center aperture 106 of the aft bulkhead 60, which center aperture 106 may be aligned with the internal passage 92. The inner radial end 102 may be mounted to the center tube 56 at (e.g., on, adjacent, or proximate) the second axial end 90. The inner radial end 102 of FIGS. 5 and 6 is mounted to the inner attachment ring 94, for example, using one or more fasteners 108 (e.g., a plurality of circumferentially distributed fasteners). The outer radial end 104 may be mounted to the outer attachment ring 62. The outer end 104 of FIGS. 5 and 6 is mounted to the second flange portion 84, for example, using one or more fasteners 110 (e.g., a plurality of circumferentially distributed fasteners). The locations of the fasteners 108 and the fasteners 110, as shown in FIG. 6, are such that the fasteners 108, 110 are configured to be accessible from a position aft of the forward centerbody assembly 48 (e.g., with the aft centerbody assembly 46 removed). Accordingly, the aft bulkhead 60 may be installed on and removed from the forward centerbody assembly 48 with the remaining components of the forward centerbody assembly 48 installed on the propulsion assembly 10. The aft bulkhead 60 of FIGS. 5 and 6 is forwardly canted such that the aft bulkhead 60 extends in an axially forward direction from an inner radial position (e.g., the inner radial end 102) to an outer radial position (e.g., the outer radial end 104). The forwardly-canted aft bulkhead 60 may form a conical shape in which the outer radial end 104 is axially forward of the inner radial end 102 circumferentially about (e.g., completely around) the axial centerline 34. The aft bulkhead 60 of the present disclosure, however, is not limited to any particular orientation.

The forward bulkhead 58 extends in a first direction from the inner radial end 96 to the outer radial end 98, which first direction may be represented by an average position of the forward bulkhead 58 between in the inner radial end 96 and the outer radial end 98. Similarly, the aft bulkhead 60 extends in a second direction from the inner radial end 102 to the outer radial end 104, which second direction may be represented by an average position of the aft bulkhead 60 between in the inner radial end 102 and the outer radial end 104. In some embodiments, the first direction of the forward bulkhead 58 may be parallel to or substantially parallel (e.g., within +/five degrees (5°) of parallel) to the second direction of the aft bulkhead 60.

The forward bulkhead 58 and/or the aft bulkhead 60 may include one or more thermal beads 112. As used herein with respect to the forward bulkhead 58 and the aft bulkhead 60, the term "thermal bead" refers to a localized out-of-plane curvature and/or localized deviation of the shape of the bulkhead 58, 60, which out of plane curvature and/or localized deviation may include a convexity 114 on a first side of the bulkhead 58, 60 and a corresponding concavity 116 on an opposing second side of the bulkhead 58, 60. For example, the thermal beads 112 of FIGS. 5 and 6 are each configured as a corrugation on the respective forward bulkhead 58 and aft bulkhead 60. The thermal beads 112 of FIGS. 5 and 6 extend circumferentially about (e.g., completely around) the axial centerline 34. The forward bulkhead 58 of FIGS. 5 and 6 includes two (2) concentric thermal beads 112. Similarly, the aft bulkhead 60 includes two (2) concentric thermal beads 112. The present disclosure, however, is not limited to any particular number of thermal beads 112 for either of the forward bulkhead 58 or the aft bulkhead 60.

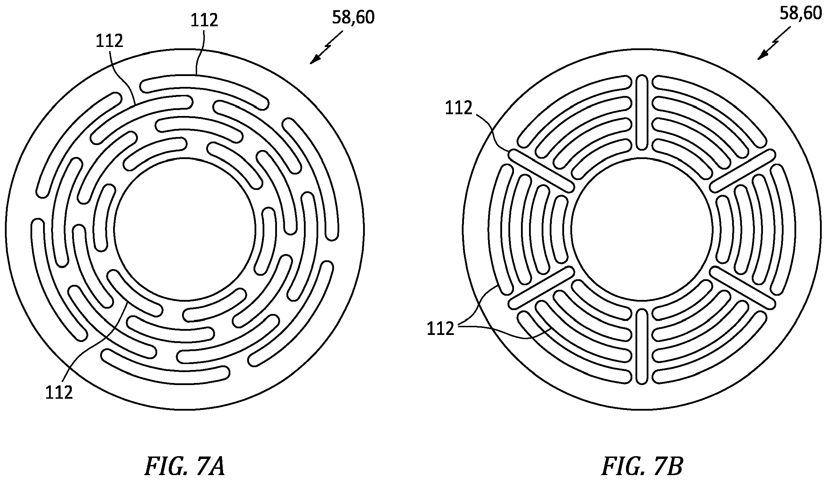

FIGS. 7A and 7B illustrate exemplary configurations of the thermal beads 112 on the forward bulkhead 58 and/or the aft bulkhead 60. As shown in FIGS. 7A and 7B, the thermal beads may be configured as multiple circumferentially-extending rows, which circumferentially-extending rows may be circumferentially continuous or discontinuous. Discontinuous circumferentially-extending rows may be circumferentially staggered relative to radially-adjacent circumferentially-extending rows (see FIG. 7A). The thermal beads 112 may additionally be configured as radially-extending thermal beads 112 (see FIG. 7B). It should be understood, however, that the present disclosure is not limited to the particular thermal bead 112 configurations illustrated in FIGS. 5, 7A, and 7B.

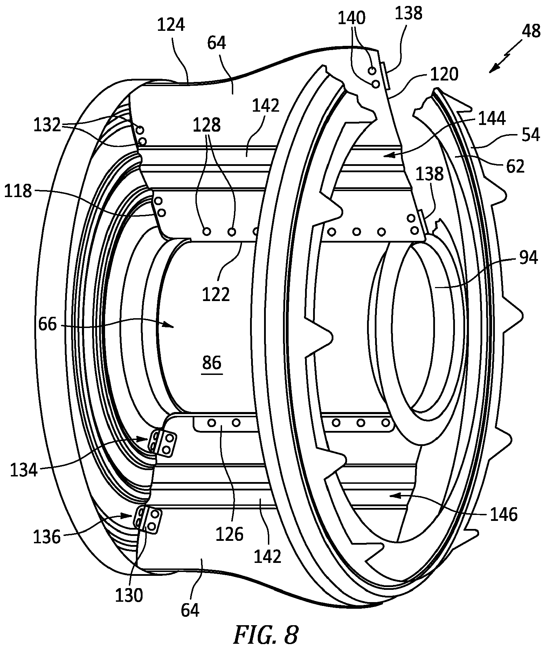

FIG. 8 illustrates a cutaway view of the forward centerbody assembly 48 including the at least one baffle 64. The aft bulkhead 60 and portions of the aft ring 54, the outer attachment ring 62, and the inner attachment ring 94 have been omitted from FIG. 8 to more clearly illustrate the at least one baffle 64. The forward centerbody assembly 48 may include the at least one baffle 64 within the acoustic cavity 66 for sub-dividing the acoustic cavity 66 into two (2) or more circumferential cavity portions. The size, shape, volume, etc. of the sub-divided portions of the acoustic cavity 66, and the configuration of the at least one baffle 64 within the acoustic cavity 66, may be selected to address the propagation characteristics of the incident combustion noise anticipated for the particular propulsion assembly 10 (see FIG. 1). Each baffle 64 extends (e.g., axially extends) between and to a first axial end 118 of the baffle 64 and a second axial end 120 of the baffle 64. Each baffle 64 further extends (e.g., radially extends) between and to an inner radial end 122 of the baffle 64 and an outer radial end 124. The outer radial end 124 may have a curvature between the first axial end 118 and the second axial end 120, which curvature may be configured to match a curvature of the outer skin 52 (see FIG. 4).

Each baffle 64 may be mounted to the tubular body 86 at (e.g., on, adjacent, or proximate) the inner radial end 122. For example, the baffles 64 of FIG. 8 are mounted to the tubular body 86 by a bracket 126 and fasteners 128. Each baffle 64 may be mounted to the forward bulkhead 58 at (e.g., on, adjacent, or proximate) the first axial end 118. For example, the baffles 64 of FIG. 8 are mounted to the forward bulkhead 58 by a bracket 130 and fasteners 132 at each of an inner radial position 134 and an outer radial position 136. Each baffle 64 may be mounted to the outer attachment ring 62 and/or the inner attachment ring 94 at (e.g., on, adjacent, or proximate) the second axial end 120. For example, the baffles 64 of FIG. 8 are mounted to the outer attachment ring 62 and the inner attachment ring 94 by a bracket 138 and fasteners 140. The second axial end 120 of each baffle 64 may be positioned at (e.g., on, adjacent, or proximate) the aft bulkhead 60 (see FIGS. 5 and 6), but may be structurally independent of (e.g., not directly, fixedly mounted to) the aft bulkhead 60. Similarly, the outer radial end 124 of each baffle 64 may be positioned at (e.g., on, adjacent, or proximate) the outer skin 52 (see FIG. 4), but may be structurally independent of (e.g., not directly, fixedly mounted to) the outer skin 52. The aft centerbody assembly 48 of FIG. 8 is illustrated with two (2) baffles 64, however, the present disclosure is not limited to any particular number of baffles 64 for the aft centerbody assembly 48.

Each baffle 64 may include one or more thermal beads 142. As used herein with respect to the baffles 64, the term "thermal bead" refers to a localized out-of-plane curvature and/or localized deviation of the shape of the baffle 64, which out of plane curvature and/or localized deviation may include a convexity 144 on a first side of the baffle 64 and a corresponding concavity 146 on an opposing second side of the baffle 64. For example, the thermal beads 142 of FIG. 8 are each configured as a corrugation on the respective baffles 64. The thermal beads 142 of FIG. 8 extend (e.g., axially extend) from the first axial end 118 of each baffle 64 to the second axial end 120 of each baffle 64. The thermal beads 142 of FIG. 8 are positioned radially between the inner radial position 134 and the outer radial position 136 for mounting the first axial end 118 to the forward bulkhead 58. For example, the inner radial position 134 may be located at (e.g., on, adjacent, or proximate) an inner radial side of the thermal bead 142 and the outer radial position 136 may be located at (e.g., on, adjacent, or proximate) an outer radial side of the thermal bead 142. The thermal beads 142 may be positioned radially coincident with one or more thermal beads 112 of the forward bulkhead 58 and/or the aft bulkhead 60. Each baffle 64 of FIG. 8 is illustrated with one (1) thermal bead 142, however, the present disclosure is not limited to any particular number of thermal beads 142 for each baffle 64.

In operation of the propulsion assembly 10, outer radial portions of the forward centerbody assembly 48 may be exposed to greater heat energy as a result of the combustion exhaust gas flow through the exhaust annulus 44 (see FIG. 2). As a result, the forward centerbody assembly 48 may experience substantial temperature gradients (e.g., in a radial direction) across components of the forward centerbody assembly 48, which temperature gradients may impart strain on the components due to different rates of thermal expansion and contraction. The configuration of the forward centerbody assembly 48 components, the thermal beads 112, and/or the thermal beads 142 of the present disclosure may facilitate a reduction in strain experienced by the components of the forward centerbody assembly 48. In one example, the thermal beads 142 of the baffles 64 may facilitate improved resilience of the baffles 64 to radial expansion and contraction of the forward bulkhead 58 and/or the aft bulkhead 60, thereby reducing shear loads on the fasteners (e.g., fasteners 128, 132, and/or fasteners 140) used for mounting the baffles 64. The location of the inner radial position 134 and the outer radial position 136 adjacent the thermal beads 142 may facilitate deformation of the respective baffles 64 without buckling. The lack of direct, fixed mounting of the outer radial end 124 (e.g., to the outer skin 52) may further facilitate deformation of the respective baffles 64 without buckling, while also maintaining the structural strength of the forward centerbody assembly 48. In a second example, the conical shapes and/or parallel configurations of the forward bulkhead 58 and the aft bulkhead 60, as well as the thermal beads 112, may allow the forward bulkhead 58 and the aft bulkhead 60 to impart axial movement upon the center tube 56 in response to radial thermal expansion and contraction of the forward bulkhead 58 and the aft bulkhead 60, thereby relieving radial strain on components of the forward centerbody assembly 48.

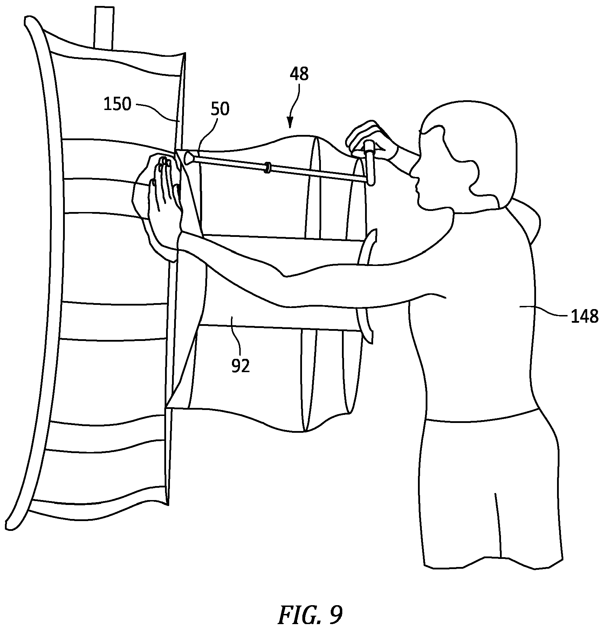

FIG. 9 illustrates a side, cutaway view of the forward centerbody assembly 48 undergoing an exemplary maintenance (e.g., mounting) procedure. The configuration of the aft bulkhead 60 (uninstalled in FIG. 9, see FIGS. 5 and 6) and the internal passage 92 of the present disclosure may allow an operator 148 to more easily access axially aft and axially forward portions of the forward flange 50, from a position aft of the forward centerbody assembly 48. The forward centerbody assembly 48 may, therefore, be more easily mounted to or removed from a static structure 150 (e.g., a turbine exhaust case (TEC)) of the propulsion system 20, for example, by manipulating one or more fasteners to mount the forward flange 50 to a corresponding flange of the static structure 150 or to remove the forward flange 50 from the corresponding flange.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present disclosure is not to be restricted except in light of the attached claims and their equivalents.

## Claims

1. A centerbody assembly comprising:
a center tube extending circumferentially about an axial centerline, the center tube extending between and to a first axial tube end and a second axial tube end;
a forward bulkhead mounted to the center tube at the first axial tube end;
an aft bulkhead mounted to the center tube at the second axial tube end;
at least one baffle extending axially from the forward bulkhead to the aft bulkhead;
at least the forward bulkhead, the aft bulkhead, or the at least one baffle including one or more thermal beads; and
an outer skin circumscribing the center tube, the forward bulkhead, the aft bulkhead, and the at least one baffle to form an acoustic cavity radially inside the outer skin.

2. The centerbody assembly of claim 1, wherein the outer skin includes a perforated skin portion and an imperforate skin portion, the perforated skin portion disposed axially forward of the imperforate skin portion, optionally wherein the perforated skin portion has a perforation open area of between 15 and 35 percent.

3. The centerbody assembly of claim 2, wherein:
the perforated skin portion is configured with a concave shape facing an exterior of the centerbody assembly; and
the imperforate skin portion is configured with a convex shape facing the exterior of the centerbody assembly.

4. The centerbody assembly of any preceding claim, wherein each of the forward bulkhead and the aft bulkhead are forwardly canted such that the forward bulkhead and the aft bulkhead extend in an axially forward direction from an inner radial position to an outer radial position, optionally wherein the forward bulkhead and the aft bulkhead are substantially parallel.

5. The centerbody assembly of any preceding claim, wherein the aft bulkhead is configured to be detached from the centerbody assembly by an operator at a position aft of the aft bulkhead.

6. The centerbody assembly of any preceding claim, wherein each of the forward bulkhead and the aft bulkhead include the one or more thermal beads, optionally wherein each of the one or more thermal beads of the forward bulkhead and the aft bulkhead extend circumferentially about the axial centerline.

7. The centerbody assembly of any preceding claim, wherein the at least one baffle includes the one or more thermal beads.

8. The centerbody assembly of claim 7, wherein:
the at least one baffle extends axially between and to a first axial baffle end and a second axial baffle end; and
the one or more thermal beads of the at least one baffle extend axially from the first axial baffle end to the second axial baffle end.

9. The centerbody assembly of any preceding claim, wherein each of the one or more thermal beads forms a corrugation of the at least the forward bulkhead, the aft bulkhead, or the at least one baffle.

10. The centerbody assembly of any preceding claim, wherein:
the center tube includes an internal passage;
the forward bulkhead includes a first center aperture, the forward bulkhead mounted to the center tube with the first center aperture positioned coincident with the internal passage; and
the aft bulkhead includes a second center aperture, the aft bulkhead mounted to the center tube with the second center aperture positioned coincident with the internal passage.

11. A centerbody assembly comprising:
a center tube extending circumferentially about an axial centerline, the center tube extending between and to a first axial tube end and a second axial tube end;
a forward bulkhead at the first axial tube end;
an aft bulkhead at the second axial tube end;
each of the forward bulkhead and the aft bulkhead forwardly canted such that the forward bulkhead and the aft bulkhead extend in an axially forward direction from an inner radial position to an outer radial position; and
each of the forward bulkhead and the aft bulkhead including one or more thermal beads; and
an outer skin circumscribing the center tube, the forward bulkhead, and the aft bulkhead to form an acoustic cavity radially inside the outer skin; and
at least one baffle extending radially from the center tube to the outer skin.

12. The centerbody assembly of claim 11, wherein:
the forward bulkhead and the aft bulkhead are substantially parallel; and/or
each of the one or more thermal beads forms a corrugation of the forward bulkhead or the aft bulkhead.

13. A centerbody assembly comprising:
a center tube extending circumferentially about an axial centerline, the center tube extending between and to a first axial tube end and a second axial tube end;
a forward bulkhead mounted to the center tube at the first axial tube end;
an aft bulkhead mounted to the center tube at the second axial tube end; and
at least one baffle extending axially from the forward bulkhead to the aft bulkhead;
each of the forward bulkhead, the aft bulkhead, and the at least one baffle include one or more thermal beads.

14. The centerbody assembly of claim 13, wherein:
the at least one baffle extends axially between and to a first axial baffle end and a second axial baffle end; and
the one or more thermal beads of the at least one baffle extend axially from the first axial baffle end to the second axial baffle end, optionally wherein the one or more thermal beads of the at least one baffle are radially coincident with the one or more thermal beads of each of the forward bulkhead and the aft bulkhead.

15. The centerbody assembly of claim 13 or 14, wherein each thermal bead of the one or more thermal beads includes a concavity and a convexity.
